# EUROPÄISCHE PATENTSCHRIFT

(11) **EP 0 460 499 B1**
(45) Veröffentlichungstag und Bekanntmachung des Hinweises auf die Patenterteilung: **15.11.1995**
(21) Anmeldenummer: 91108648.6
(22) Anmeldetag: 28.05.1991
(51) Int. Cl.: B01D 37/02, B01D 39/02, B01J 20/28, C12H 1/02

(54) **Verfahren zum Filtrieren von Getränken, chemischen, pharmazeutischen oder ähnlichen Flüssigkeiten**
Method for the filtration of beverages and of chemical, pharmaceutical and similar liquids
Procédé de filtration de boissons, de liquides chimiques, pharmaceutiques et similaires

(30) Priorität: 02.06.1990 DE 4017855; 28.03.1991 DE 4110252
(43) Veröffentlichungstag der Anmeldung: 11.12.1991
(73) Patentinhaber: SCHENK-FILTERBAU GESELLSCHAFT MIT BESCHRÄNKTER HAFTUNG, D-73550 Waldstetten (DE)
(72) Erfinder: Oechsle, Dietmar, Dr. Dipl.-Chem., W-7070 Schwäbisch-Gmünd (DE); Baur, Wolfgang, Dipl.-Ing., W-7076 Waldstetten (DE); Gottkehaskamp, Ludger, Dipl.-Ing., W-7070 Schwäbisch-Gmünd (DE)
(74) Vertreter: Wasmuth, Rolf, Dipl.-Ing.

(56) Entgegenhaltungen:
- WO-A-86/05511
- DE-A- 3 626 378
- US-A- 4 238 334

## Beschreibung

Die Erfindung betrifft eine Mischung von Filterhilfsmitteln nach dem Oberbegriff des Patentanspruches 1 und Verfahren unter Verwendung der Filterhilfsmittel-Mischung.

Eine derartige Filterhilfsmittel-Mischung und deren Verwendung beim Verfahren zum Filtrieren von Getränken und ähnlichen Flüssigkeiten ist aus der WO-A-86/05511 bekannt.

Bei der bekannten Anschwemm-Filtration wird ein poröser Filterkuchen gebildet, der auf physikalisch-mechanischem Wege die unlöslichen Teilchen der Flüssigkeit, nämlich Trubstoffe, zurückhält. Die der zu filtrierenden Flüssigkeit, dem Unfiltrat, zudosierten Filterhilfsmittel müssen prinzipiell zwei Eigenschaften aufweisen: Sie müssen genügend schwer sein, damit sie sich auf der vorgesehenen Unterlage absetzen und nicht "wegschwimmen", und sie müssen im Filterkuchen ein genügend poröses Gefüge bilden, um die geklärte Flüssigkeit durchzulassen. Da sich die Poren oder Kapillaren im Laufe der Filtration durch Anlagerung der Trubstoffe zusetzen und der Filterkuchen an Dicke zunimmt, wird der Filtriervorgang nach Erreichen einer bestimmten Mindestdurchlässigkeit beendet.

Die üblicherweise und auch in der bekannten Mischung verwendeten Filterhilfsmittel, zu denen vor allem Kieselgure und Perlite gehören, erfüllen zwar die Forderungen nach genügendem Eigengewicht einerseits und Aufbau eines porösen Filterkuchens andererseits, und sie können auch zwecks Wiederverwendung regeneriert werden. Dabei wird aber ihre Struktur mehr oder weniger weitgehend zerstört, weil sie von den zur Regenerierung verwendeten Laugen oder Säuren angegriffen werden. Es war darum bisher nicht möglich, regenerierte Filterhilfsmittel - allein - wiederzuverwenden, ohne die Qualität der Filtration zu beeinträchtigen.

Der Erfindung liegt die Aufgabe zugrunde, die filtrationsaktive Struktur der eingesetzten Filterhilfsmittel bei deren Regeneration beizubehalten, so daß die Filtrationseigenschaften trotz wiederholten Einsatzes unverändert bleiben.

Die Aufgabe wird gemäß der Erfindung mit einer Filterhilfsmittel-Mischung nach dem Patentanspruch 1 bzw. deren Verwendung nach den Patentansprüchen 11, 13 und 16 gelöst.

Die erfindungsgemäße Filterhilfsmittel-Mischung enthält zwei Komponenten, von denen die Komponente a das zur Anlagerung als Filterkuchen notwendige Gewicht ergibt und die andere Komponente b für die erforderliche Porösität sorgt, wobei die Bestandteile dieser Mischung gegen die zur Reinigung bzw. Regenerierung verwendeten Lösungsmittel beständig sind, so daß ihre Filtereigenschaften bei der Regenerierung aufrechterhalten bleiben.

Filterhilfsmittel werden bei der Filtration von Flüssigkeiten, insbesondere feststoffhaltigen Suspensionen, üblicherweise zusätzlich zu dem eigentlichen Filter eingesetzt, der beispielsweise aus mechanischen Filterelementen eines Kesselfilters besteht. Sie ermöglichen bei Suspensionen mit nur wenig Feststoff die Bildung eines Filterkuchens, der von der Oberfläche der Filterelemente abnehmbar ist oder bei schleimigen Feststoffen den sich bildenden sehr dichten Kuchen auflockern. Die Filterhilfsmittel werden bei der Auschwemmfiltration der zu filternden Suspension unmittelbar zugesetzt und zu einem Kuchen zwecks Vorklärung des Unfiltrats angeschwemmt. Gebräuchliche Filterhilfsmittel sind Zellulose, Kieselgel, Kieselgur, Perlite, Holzkohle, Holzmehl und ähnliche Stoffe. Sie wirken durchweg physikalisch-mechanisch, verändern also nicht die chemische Zusammensetzung der Flüssigkeit und sind unlöslich. Bei ihrer Anschwemmung ergeben sich im Filterkuchen zahlreiche Kapillaren, die klein genug sind, um die Feststoffe zurückzuhalten, aber auch zahlreich genug, um eine optimale Durchlässigkeit zu gewährleisten. Klassische Filter zur Vorklärung sind Rahmen- oder Kesselfilter; die bei diesen verwendeten Filterhilfsmittel sind nach ihrer Erschöpfung unbrauchbar und müssen als Abfall weggeworfen und entsorgt werden.

In Fällen, wo diese Vorklärung bzw. Vorfiltration allein nicht den gestellten hohen Qualitätsanforderungen genügt, z.B. den Anforderungen an die sogenannte Glanzfeinheit oder biologische Haltbarkeit von Bier oder Wein, wird zusätzlich eine Sterilisations- bzw. Entkeimungsfiltration als Nachklärung durchgefürt. Hierzu werden Schichtenrahmenfilter oder tellerartig angeordnete Filterelemente in Kesselfiltern, beidseitig belegte Filterschichten in Filtermodulen und/oder Membranfilter eingesetzt. Als Rohstoffe für Schichtenfilter oder Filterschichten werden organische und anorganische, meist faserige oder körnige Stoffe, beispielsweise Zellulosen aus Hölzern, Baumwolle, Kunststoff-Fasern, Kieselgur, Perlite, α-Aluminiumoxid sowie Kaolin verwendet.

Dabei dienen Kieselguren zur Steigerung der Filtrationsaktivität und Perlite zur Auflockerung des Schichtgefüges und damit zur Vergrößerung des Porenvolumens bzw. des Trubvolumens. Da beide Stoffe mehlig sind, schwächen sie die mechanische Festigkeit der Filterschicht, so daß bei Druckstößen, beispielsweise infolge Fehlbehandlung oder Fehlbedienung, die Filterschichten, insbesondere solche bei der Sterilfiltration, durchbrechen können, wodurch die Qualität der Filtration stark beeinträchtigt werden kann. Sicherheitshalber werden solchen Filtern stromabwärts, also auf der Sterilseite, häufig noch Sterilfilter mit feiner Porengröße und echter Siebwirkung, beispielsweise Membranfilter mit elastischen Materialien, nachgeschaltet. Um die Belastung der Umwelt mit bei diesen bekannten Verfahren in großem Umfange anfallenden unbrauchbaren Filterhilfsmitteln einzuschränken, die unter erheblichem Kostenaufwand auf Deponien gelagert werden müssen, sind Verfahren zur Verlängerung der Standzeiten dieser Filterhilfsmittel bekannt geworden. Aus der DE-A-36 26 378 ist ein Verfahren für die Anschwemmfiltration von Getränken bekannt, bei welchem anstelle von Kieselguren ein chemisch regenerierbares Filterhilfsmittel aus pulverförmigem Aluminiumoxid verwendet wird. Der hieraus bestehende angeschwemmte Filterkuchen hat aber eine so hohe Dichte, daß die Filtration schon bei Erreichen einer sehr geringen Schichtdicke beendet werden muß. In der gattungsbildenden WO-A- 86/05511 ist ein Verfahren zum Nachklären und Stabilisieren von Polyphenole und/oder Eiweißstoffe enthaltenden Flüssigkeiten beschrieben, bei welchem die nachzuklärende und zu stabilisierende Flüssigkeit mittels einer Zentrifuge vorgeklärt, dann mit einem Gemisch aus Polyphenole und Eiweißstoffe adsorbierenden Stabilisierungsmitteln und Feinsttrubstoffe zurückhaltenden Filterhilfsmitteln vermischt wird, worauf diese Suspension in eine für die Retention von Feststoffen geeignete Vorrichtung überführt wird. Der sich in dieser Vorrichtung aufbauende Feststoffkuchen wird nach Beendigung der Flüssigkeitsbehandlung regeneriert, um die Filterhilfsmittel und das regenerierbare Stabilisierungsmittel zurückzugewinnen. Dies geschieht mittels 1- bis 2%iger wässriger NaOH-Lösung bei einer Temperatur von 50 bis 60°C. Die verwendeten Filterhilfsmitte enthalten bekannte Komponenten, nämlich Kieselguren, Perlite, Zellulosefasern und/oder -granulate, beispielsweise Polyamide, halogenisiertes Polyäthylen und/oder Polypropylen, insbesondere fluorisiertes Polyäthylen. Die bei diesem Verfahren eingesetzten Filterhilfsmittel verändern bei der chemischen Regeneration ihre filtrationsaktive Struktur, ihre Permeabilität und ihre Filtrationsschärfe so stark, daß die Filtrationseigenschaften in hohem Maße negativ beeinflußt werden. Sie müssen nach entsprechend kurzer Standzeit entsorgt werden. Ein anderes auf dem Markt befindliches Filterverfahren benutzt einen in sich geschlossenen Filter, der aus zwei Deckeln besteht und je nach Filtrationsleistung mehrere Filterelemente hat. Diese Filterelemente können auf Hubstangen durch eine spezielle Hubvorrichtung verschoben werden. Zur Vorklärung und/oder Nachklärung werden Zellulose, Perlite, Kieselgur und Kunststoff-Fasern verwendet, die auf den horizontalen Filterelementen mit Warmwasser gespült werden können. Eine Regeneration erfolgt mit chemischen Mitteln außerhalb des Filtergerätes. Auch bei diesem bekannten Verfahren müssen die verwendeten Filterhilfsmittel trotz Verlängerung der Standzeit unter erheblichem Aufwand als Abfall entsorgt werden.

Aus der EP-B1-031 522 ist ein Verfahren zum Filtrieren von Getränken, insbesondere von Bier, nach dem Anschwemm-Filtrationsverfahren bekannt, bei welchem das verwendete Filterhilfsmittel vollständig oder teilweise aus Fasern aus praktisch reiner Kieselsäure mit einer Stapellänge von etwa 30 bis 7000 µm und einem Durchmesser von etwa 4 bis 20 µm besteht. Die Kieselsäure wird gewonnen, indem man wasserhaltiges Natronwasserglas trocken verspinnt und die erhaltenen Wasserglasfasern zur Umwandlung des Natriumsilikats in Kieselsäure mit wässrigen, wasserstoffionenhaltigen Säure- oder Salzlösungen behandelt. Dabei kann auch ein Filterhilfsmittel verwendet werden, das Kieselsäurefasern enthält, denen bis zu 50 Gew.-% Faserkurzschnitt aus organischen Fasern beigemengt ist.

Aus der DE-A-10 10 058 ist bekannt, bei einem Verfahren zur Herstellung eines Filterhilfsmittels für Bier oder dgl. entfettetes Aluminiumblättchenpulver in heißem Wasser so zu behandeln, daß es sich mit einer Böhmitschicht überzieht. Ein so behandeltes Aluminiumblättchenpulver soll allein oder in Mischung mit Guren oder anderen Filterhilfsmitteln eine Verbesserung der biologischen Beschaffenheit und der Glanzfeinheit von Bier oder dgl. ergeben.

Demgegenüber wird gemäß der Erfindung eine Mischung aus Filterhilfsmitteln eingesetzt, die gegen Säuren, Laugen, Tenside und Oxidationsmittel bei den zur Regeneration notwendigen Konzentrationen inert, also beständig sind, und dadurch bei der Regeneration ihre Filtriereigenschaften voll aufrechterhalten. Bei der Filterierung wird ein Filterkuchen aus einer Kombination von Filterhilfsmitteln unterschiedlicher Morphologie und physikalischer Kenngrößen aufgebaut, und die Komponenten der Bestandteile sind so gewählt, daß ein- und derselbe Filterkuchen jeweils nach Regenerierung wiederholt sowohl für die Vorfilterung als auch für die Nachfiltrierung zu verwenden ist. Die Komponente a) nach Anspruch 1 gewährleistet eine einwandfreie Anschwemmung der Filterhilfsmittel-Mischung, verhindert insbesondere, daß der Filterkuchen wegschwimmt, und erhöht die Stabilität sowie insbesondere die mittlere Dichte des Filterkuchens. Die Komponente b) vergrößert in gewünschter Weise das anzuschwemmende Filterkuchenvolumen und damit den Trubraum. Zu diesem Zweck kann die Komponente b vorteilhaft aus trockengemahlenen bzw. gekürzten Kunststoff- und/oder Zellulosefasern bestehen. Dabei haben vorteilhafterweise die trockengemahlenen bzw. gekürzten Kunststoff- und/oder Zellulosefasern eine Faserlänge von 1 bis 5000 µm und eine Faserdicke von 2 bis 100 µm.

Werden höhere Qualitätsanforderungen an das Filtrat, beispielsweise bei Getränken, wie Wein oder Bier, gestellt, werden für die Komponente b) fibrillierte bzw. aufgespleißte Kunststoff- und/oder Zellulosefasern verwendet. Diese fibrillierten bzw. aufgespleißten Kunststoff- und/oder Zellulosefasern weisen zweckmäßig eine Faserlänge von 500 bis 5000 µm und eine Faserdicke von 0,5 bis 20 µm auf. Hierdurch wird die Filtrationsschärfe des Filterkuchens infolge der Neigung dieser Komponente zur verfilzenden Anschwemmung, die auch als Quallenbildung bezeichnet wird, verbessert.

Werden sehr hohe bzw. höchste Qualitätsanforderung an die Filtration, insbesondere bei der Sterilisationsfiltration in Form einer Tiefenfiltration - also bei der Nach-filtration - gestellt, empfiehlt es sich, die Komponente b sowohl aus trockengemahlenen bzw. gekürzten Kunststoff- und/oder Zellulosefasern als auch aus fibrillierten bzw. aufgespleißten Kunststoff- und/oder Zellulosefasern zusammenzusetzen.

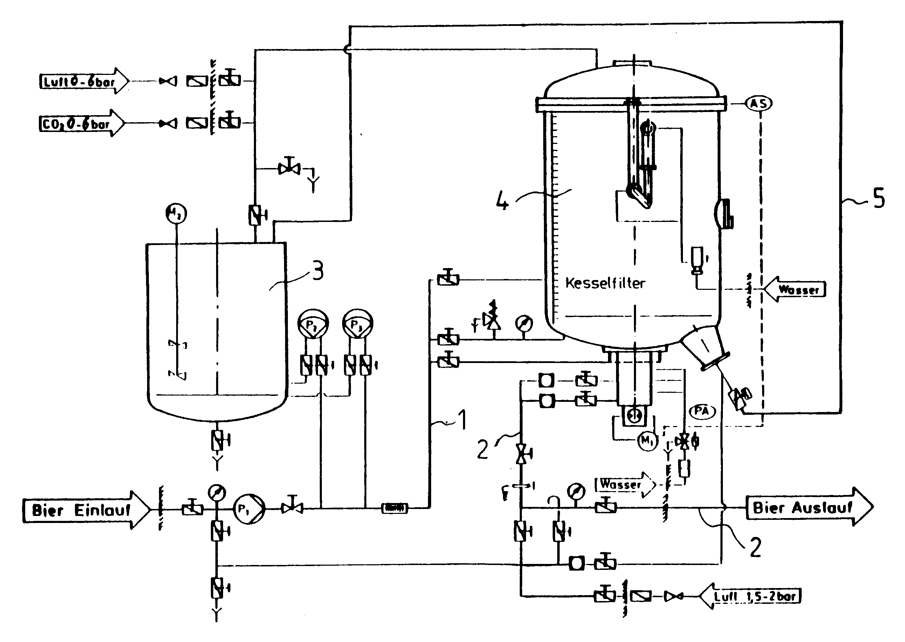

Als trockengemahlene bzw. gekürzte Zellulosefasern können solche verwendet werden, wie sie beispielsweise in dem Aufsatz "Filtermedien im Raster-Elektronenmikroskop (REM" von F. Brenner und D. Oechsle in der Brauwelt, Jahrgang 125 (1985), Heft 4, S. 130 - 137 (vgl. dort Abb. 11) und in dem Aufsatz "Struktur und Wirkungsweise verschiedener Filtermedien bei der Flüssigkeitsfiltration" von Dr. D. Oechsle und Dipl.- Ing. H.- O. Feuerpeil in der Zeitschrift "confructa" I/85 (vgl. dort Abb. 7) dargestellt sind Dieselben Literaturstellen zeigen auch in den Abb. 12 (Brauwelt) und 8 (confructa) asbestfreie Filterflocken feinstfibrilliert, wie sie für die zweite Komponente (Anspruch 5) geeignet sind.

Die spezifisch schwere Mischkomponente a kann aus folgenden Einzelbestandteilen oder aus Mischungen dieser Bestandteile bestehen: Hochkalzinierte Oxide, vorzugsweise α-Aluminiumoxid, Zirkonoxid mit einer Korngrößenfraktion im Bereich zwischen 1 bis 200 µm, Sintermetallpartikel, insbesondere Edelstahlsintermetallpartikel mit einer Korngröße zwischen 1 und 500 µm und einer Porengröße zwischen 0 und 30 µm und/oder aus Fasern, vorzugsweise Edelstahlfasern oder Kohlenstoffasern, mit einer Faserdicke zwischen 1 und 100 µm und einer Faserlänge von 0,05 bis 5 mm. Diese spezifisch schwere Komponente a bewirkt einen stabilen, dauerhaften Filterkuchen.

Als Kunsstoffasern entsprechend der Komponente b sind solche aus Polyäthylen (PE), vorzugsweise High-Density-Polyäthylen (HDPE), Polypropylen (PP), halogenierte Polyäthylene, Polyoxymethylene, Polyamide, vorgesehen. Als Zellulosefasern wird bevorzugt α-Zellulose verwendet. Die Zellulose wird durch chemische Behandlung von allen löslichen Bestandteilen befreit und ist laugenbeständig. Der anzuschwemmende Filterkuchen wird vorteilhaft im wesentlichen durch die Komponenten a und b nach Anspruch 5 gebildet. Dabei ist es wichtig, daß alle Komponenten der Filterhilfsmittel-Mischung vor ihrer Verwendung bis zu ihrer Homogenisierung lange und intensiv in nasser Phase zusammengerührt werden.

Zum Vor- und Nachklären von Flüssigkeiten unter Verwendung einer Filterhilfsmittel-Mischung nach einem der Ansprüche 1 bis 10 wird so vorgegangen, daß mit ein- und derselben Filterhilfsmittel-Mischung zunächst eine Vorfiltration und anschließend eine Nachfiltration durchgeführt wird, indem bei der Vorfiltration dem Unfiltratstrom laufend die Filterhilfsmittel-Mischung zudosiert wird und ein Filterkuchen mit einer Dicke von etwa 10 bis 50 mm angeschwemmt wird. Durch diesen kontinuierlichen Filterkuchenaufbau mittels Anschwemmfiltration ist der Einbau einer maximalen Trübungsstoffmenge in den Filterkuchen möglich. Nach Erschöpfung des Trubraumes im Filter oder nach Erreichen der maximal zulässigen Druckdifferenz werden dann die im Filterkuchen zurückgehaltenen Bestandteile der Filterflüssigkeit durch Lösungsmittel, in denen die zurückgehaltenen Bestandteile löslich sind, herausgespült. Dies kann beispielsweise durch eine 0,1 bis 10 gew.-%ige wässrige Natriumhydroxid- und/oder Sodalösung bei einer Temperature von 40 bis 100°C ohne Beeinträchtigung der Filterhilfsmittel-Mischung und damit ohne Beeinträchtigung ihrer Filtrationsaktivität erreicht werden. Die so vorfiltrierte Flüssigkeit wird dann zur Nachfiltration wieder über den bei der Vorfiltration gebildeten, freigespülten und sterilisierten Filterkuchen zwecks Tiefenfiltrierung gefiltert, wonach schließlich nach Beendigung dieser Filtration die im Filterkuchen zurückbehaltenen Bestandteile wieder mit entsprechenden Lösungsmitteln aus dem Filterkuchen herausgespült werden. Der Filterkuchen wird dann aus dem Filter ausgetragen, in einen getrennten Behälter überführt, homogen suspendiert und danach zur erneuten Anschwemmvorfiltration verwendet. Etwa im Filterkuchen zurückgehaltene Trubstoffe werden dabei auch im resuspendierten Zustand bei Bedarf aus der Filterhilfsmittel-Suspension mit geeigneten Lösungsmitteln, beispielsweise 1%iger NaOH von 70 bis 80°C herausgelöst. Dieses Verfahren kann in diskontinuierlicher Weise in einem einzigen geschlossenen Filter, beispielsweise einem Kesselfilter, durchgeführt werden. Das Verfahren kann auch kontinuierlich ausgeführt werden, indem in einem ersten Filter die Anschwemmung des Filterkuchens mit Vorfiltration erfolgt und in einem nachgeschalteten zweiten Filter die Nachfiltration bzw. Tiefenfiltrierung über einen vor der Filtration aufgebauten Filterkuchen unter Verwendung ein- und derselben Filterhilfsmittel-Mischung oder der grundsätzlich gleichen Filterhilfsmittel-Mischung, jedoch mit unterschiedlichen Mischverhältnissen durchgeführt wird.

Nachstehend wird ein Beispiel für die Durchführung des Verfahrens angegeben:
Zunächst werden Mischungskomponenten a) und b) für die Vorfiltration oder für eine Vor- und Nachfiltration mit zusätzlich dritter Mischkomponente durch langes Rühren zu einem einheitlichen Gemisch homogenisiert und aus einem Dosierbehälter in einen Wasserkreislauf auf die Filterelemente des Filters so lange vorangeschwemmt, bis auf den Filterelementen etwa 1000 bis 2000 g Filterhilfsmittel pro m² angeschwemmt sind. Diese Voranschwemmung ist zweckmäßig, weil die Gewebeporen des Filterelementes, die eine Größe von etwa 50 bis 80 µm haben können, zur Erzielung einer qualitativ hochwertigen Filterung durch diese Voranschwemmung minimal klein gehalten werden sollten. Nach dem Voranschwemmen wird dann weiteres Filterhilfsmittel-Gemisch zusammen mit Unfiltrat in den Filter eingespeist, und zwar so lange, bis der Trubraum aufgebraucht oder die zulässige Druckdifferenz des Kessels erreicht ist. Dabei werden Filterkuchen von etwa 20 bis 25 mm Dicke aufgebaut, wonach die Filtration durch Abstellen der Förderpumpe beendet wird. Das restliche Unfiltrat wird anschließend mittels Druckgas über den Filterkuchen zwecks Entleerung des Kessels herausgedrückt. Im Anschluß hieran kann die Filterhilfsmittel-Mischung dadurch regeneriert werden, daß der Kessel mit Wasser bzw. Heißwasser aufgefüllt wird, gegebenfalls unter Zusatz von Lauge, falls die Druckdifferenz entsprechend hoch ist bzw. die Trubstoffe nicht wasserlöslich sind. Dabei wird das zur Regeneration eingefüllte Medium im Kreislauf geführt. Danach wird der Filter wieder entleert und der Filterkuchen mit Wasser so lange gespült, bis der Filterkuchen wieder neutral ist. Wenn alle Reste herausgewaschen sind, wird der im Filter aufgebaute, sterilisierte Filterkuchen für die Nachfiltration bzw. Feinfiltration des vorfiltrierten Produktes verwendet, indem zunächst der regenerierte und sterilisierte Filterkuchen konditioniert wird und dann die Nachfiltration in Form einer Tiefenfiltration über den aufgebauten Filterkuchen ohne laufende Filterhilfsmittel-Dosage durchgeführt wird.

Nachstehend wird noch ein Beispiel für die Konditionierung des Filterkuchens angegeben, welche während des Verfahrens stattfindet.

Ein Filterkuchen, bestehend, aus 50 % PE-Fasern mittlerer Faserlänge von 1 bis 2 mm und einer mittleren Faserdicke von 30 µm und 20 % Zirkondioxidfasern sowie 30 % Zirkondioxidgranulat mittlerer Partikelgröße von etwa 40 µm, der gegen ein 10 Gew.%iges Lösungsmittel, vorzugsweise Wasser, Laugen, Säuren und/oder Oxidationsmittel, inert ist, wird nach erfolgter Anschwemmung und Spülung gemäß den angegebenen Lösungsmitteln konditioniert, indem der Filterkuchen durch Entwässern bei einem Druck von beispielsweise 5 bar mit Inertgas, beispielsweise CO₂, um ca. 20 % in seiner Höhe verringert wird und dadurch eine gewünschte Permeabilität erhält. Die angegebenen Lösungsmittel sind so beschaffen, daß die im Filterkuchen retentierten Komponenten aus dem Unfiltrat löslich sind, und daß sie eine Temperaturbeständigkeit bis mindestens 100°C haben. Die erfindungsgemäße Filterhilfsmittel-Mischung weist eine Morphologie und Feinstruktur auf, die ihre Filtrationgsaktivität bei wiederholten Filtrier- und Regenerationsvorgängen nicht verliert und daher ständig wiederverwendbar ist. Darüber hinaus hat der Filterkuchen, bestehend aus der erfindungsgemäßen Filterhilfsmittel-Mischung, einen stark temperaturabhängigen Ausdehnungskoeffizienten, der ein Freispülen der retentierten Partikel aus dem Filterkuchen erleichtert.

Das Verfahren wird nachstehend noch anhand der Zeichnung näher erläutert:
Die zu filtrierende Flüssigkeit, im Ausführungsbeispiel Bier, wird über die Leitung 1 der Filtrationseinrichtung 4 zugeführt und verläßt diese Einrichtung über die Leitung 2. Die Vorklärung bzw. Vorfiltration erfolgt bei laufender Dosage der Filterhilfsmittel-Mischung mittels der Dosierpumpen P₂, P₃ in die zu filtrierende Flüssigkeit, also den Unfiltratstrom, wobei der Filterkuchen angeschwemmt wird. Die für den jeweiligen Anwendungsfall geeignete Filterhilfsmittel-Mischung wird hierzu in dem Behälter 3 beispielsweise in Wasser oder in der zu filtrierenden Flüssigkeit in einem Gewichtsverhältnis von 1:5 bis 1:50, vorzugsweise 1:10 bis 1:25, angesetzt und suspendiert. Als geeignet hat sich beispielsweise eine Zusammensetzung der Mischung erwiesen, bestehend aus höchstens 75 %, vorzugsweise 20 bis 60% PE-Fasern mittlerer Faserlänge 1,2 mm und mittlerer Faserdicke 30 µm, 10 bis 40 % Zirkondioxid-Fasern, bevorzugt 15 bis 20 %, sowie 10 bis 50 %, vorzugsweise 25 bis 45%, Zirkondioxidgranulat mittlerer Partikelgröße von eta 40 µm. Nach Beendigung der Vorklärung bzw. Vorfiltration werden die im Filterkuchen aus dem Unfiltrat retentierten Bestandteile mit geeigneten Lösungsmitteln herausgelöst bzw. herausgespült.

Wie schon erwähnt, sind geeignete Lösungsmittel Wasser mit einer Temperatur von 50 bis 100°C, vorzugsweise 70 bis 90°C, 0,5 bis 2 Gew. %ige wässerige NaOH-Lösungen mit Temperaturen von vorzugsweise 70 bis 90°C, 1 bis 2 Gew. %ige wässrige HNO₃-Lösungen sowie 0,1 bis 0,3 Gew. %ige Peressigsäure- bzw. Wasserstoffperoxidlösungen mit einer Temperatur von 20 bis 40°C.

Sofern die geforderte Qualität es erfordert, kann über den bei der Vorklärung aufgebauten Filterkuchen eine Nachfiltration bzw. Tiefenfiltration ohne laufende Zugabe der Filterhilfsmittel-Mischung über den konditionierten Filterkuchen erfolgen. Die danach erforderliche Freispülung des Filterkuchens erfolgt in gleicher Weise wie nach der Vorklärung. Danach wird der Filterkuchen vom Filter mittels. Druck über die Leitung 5 in einen separaten Tank, z.B. in den Behälter 3, überführt und kann für eine weitere Vorfiltration erneut eingesetzt werden.

Wesentlich für die gewünschte Filtrationsaktivitat der Filterhilfsmittel-Mischung ist, daß mindestens ein Teil der Kunststoff- und/oder Zellulosefasern mechanisch, beispielsweise durch trockenes Mahlen oder durch Fibrillieren in Längsrichtung aufgeschlossen ist, um eine den Filtrationswirkungsgrad günstig beeinflussende Struktur der Fasern zu erhalten. Dieses Fibrillieren bzw. die mechanische Aufschließung mindestens eines Teils vorzugsweise der Kunststoff-Fasern, z.B. PE-Fasern, ist besonders wichtig beim Einsatz der Komponenten für die Nachklärung. Die Fibrillierung kann in bekannter Weise naß erfolgen, während eine mechanische Aufspleißung von Fasern zweckmäßig im Wege des Trockenmahlens beispielsweise mittels Holzmühlen erfolgen kann.

## Patentansprüche

1. Mischung von Filterhilfsmitteln unterschiedlicher morphologischer und physikalischer Eigenschaften zur Anschwemmung eines Filterkuchens zwecks mechanischen Abtrennens von unlöslichen Teilchen aus Flüssigkeiten durch Filtrieren, insbesondere im Wege der Vor- und/oder Nachfiltration, von Getränken, chemischen, pharmazeutischen oder ähnlichen Flüssigkeiten, wobei die Filterhilfsmittel-Mischung nach Reinigung wiederverwendbar ist, dadurch gekennzeichnet, daß die Bestandteile der Mischung gegen Lösungsmittel in den zur Reinigung notwendigen Konzentrationen beständig und als Bestandteile mindestens die folgenden Komponenten (a) und (b) vorhanden sind:
(a) chemisch beständige, im Vergleich zur Komponente b spezifisch schwere Metall- und/oder Metalloxide und/oder Kohlenstoffteilchen faseriger und/oder körniger Struktur;
(b) Kunststoff- und/oder Zellulosefasern mit einer Faserlänge von 1 bis 5000 µm und einer Faserdicke von 0,5 bis 100 µm.

2. Mischung nach Anspruch 1,
dadurch gekennzeichnet, daß die spezifisch schwere Mischkomponente aus folgenden Einzelbestandteilen oder aus Mischungen dieser Bestandteile besteht, nämlich hochkalzinierten Oxiden, vorzugsweise α-Aluminium-oxid, Zirkonoxid mit einer Korngrößenfraktion im Bereich zwischen 1 bis 200 µm,
Sintermetallpartikeln, insbesondere Edelstahlsintermetallpartikeln, mit einer Korngrößenfraktion zwischen 1 und 500 µm und einer Porengröße zwischen 0 bis 30 µm,
Fasern, vorzugsweise Edelstahlfasern, Glasfasern oder Kohlenstoff-Fasern, mit einer Faserdicke zwischen 1 und 100 µm und einer Faserlänge von 0,05 bis 5 mm.

3. Mischung nach Anspruch 1 oder 2,
dadurch gekennzeichnet, daß die zweite Komponente (b) aus trockengemahlenen bzw. gekürzten Kunststoff- und/oder Zellulosefasern besteht.

4. Mischung nach Anspruch 3,
dadurch gekennzeichnet, daß die trockengemahlenen bzw. gekürzten Kunststoff- und/oder Zellulosefasern eine Faserdicke von 2 bis 100 µm aufweisen.

5. Mischung nach Anspruch 1 oder 2,
dadurch gekennzeichnet, daß zur Erhöhung der Filtrationsschärfe des Filterkuchens die zweite Komponente (b) aus Kunststoff- und/oder Zellulosefasern besteht, die fibrilliert bzw. aufgespleißt sind.

6. Mischung nach Anspruch 5,
dadurch gekennzeichnet, daß die fibrillierten bzw. aufgespleißten Kunststoff- und/oder Zellulosefasern eine Faserlänge von 500 bis 5000 µm und eine Faserdicke von 0,5 bis 20 µm aufweisen.

7. Mischung nach Anspruch 1 oder 2,
dadurch gekennzeichnet, daß die zweite Komponente (b) aus den Bestandteilen gemäß Anspruch 3 oder 4 und gemäß Anspruch 5 oder 6 besteht.

8. Mischung nach einem der Ansprüche 1 bis 7,
dadurch gekennzeichnet, daß die Kunststoff-Fasern aus Polyäthylen (PE), vorzugsweise High-Density-Polyäthylen (HDPE), Polypropylen (PP), halogenierten Polyäthylenen, Polyoxymethylen, Polyamiden, oder aus Mischungen solcher Fasern bestehen.

9. Mischung nach Anspruch 8,
dadurch gekennzeichnet, daß die Kunststoff-Fasern eine Faserlänge von 500 bis 5000 µm und eine Faserdicke von 2 bis 100 µm aufweisen.

10. Mischung nach einem der Ansprüche 1 bis 9,
dadurch gekennzeichnet, daß als Zellulosefasern α-Zellulose vorgesehen ist.

11. Verfahren zum Filtrieren von Getränken, chemischen, pharmazeutischen oder ähnlichen Flüssigkeiten durch mechanisches Abtrennen unlöslicher, insbesondere kolloide Strukturen aufweisender Teilchen aus der Flüssigkeit, bei welchem eine Filterhilfsmittel-Mischung gemäß einem der Ansprüche 1 bis 10 dem Unfiltrat, nämlich der unbehandelten, Trubstoffe aufweisenden Flüssigkeit zwecks Bildung eines Filterkuchens durch Anschwemmen zudosiert wird, danach die nach der Anschwemmung im Filterkuchen zurückgehaltenen Feststoffteilchen herausgespült und die Filterhilfsmittel-Mischung sowie etwa zugegebene Stabilisierungsmittel zwecks Wiederverwendung regeneriert werden.

12. Verfahren nach Anspruch 11,
dadurch gekennzeichnet, daß alle Komponenten der Filterhilfsmittel-Mischung vor ihrer Verwendung bis zu ihrer Homogenisierung in nasser Phase zusammengerührt werden.

13. Verfahren zum Vor- und Nachklären von Flüssigkeiten unter Verwendung einer Filterhilfsmittel-Mischung gemäß einem der Ansprüche 1 bis 10, wobei
mit ein und derselben Filterhilfsmittel-Mischung zunächst eine Vorfiltration und anschließend eine Nachfiltration durchgeführt wird, indem bei der Vorfiltration dem Unfiltratstrom laufend die Filterhilfsmittel-Mischung zudosiert und ein Filterkuchen mit einer Dicke von etwa 10 bis 50 mm angeschwemmt wird, wobei im kontinuierlichen, durch die Anschwemmfiltration entstehenden Filterkuchenaufbau der Einbau einer Trübungsstoff-Menge bis zur Erschöpfung des Trubraums im Filterapparat oder Erreichen der maximal zulässigen Druckdifferenz fortgesetzt wird, wobei anschließend die im Filterkuchen zurückgehaltenen Bestandteile der Filterflüssigkeit durch Lösungsmittel herausgespült werden, in denen die zurückgehaltenen Bestandteile löslich sind, insbesondere durch eine 0,1- bis 10gewichtsprozentige wässerige Natriumhydroxid- und/oder Sodalösung bei einer Temperatur von 40 bis 100°C, und danach die so vorfiltrierte Flüssigkeit zur Nachfiltration wieder über den bei der Vorfiltration gebildeten, freigespülten und sterilisierten Filterkuchen zwecks Tiefenfiltrierung gefiltert wird, und wobei nach Beendigung dieser Filtration die im Filterkuchen zurückgehaltenen Bestandteile wieder mit entsprechenden Lösungsmitteln aus dem Filterkuchen herausgespült werden, worauf der Filterkuchen aus dem Filter ausgetragen, in einen getrennten Behälter überführt, homogen suspendiert und danach zur erneuten Anschwemmvorfiltration verwendet wird, wobei etwa im Filterkuchen zurückgehaltene Trubstoffe auch im resuspendierten Zustand bei Bedarf aus der Filterhilfsmittel-Suspension mit geeigneten Lösungsmitteln, insbesondere 1%iger NaOH bei einer Temperatur von 70 bis 80°C, herausgelöst werden.

14. Verfahren nach Anspruch 13,
dadurch gekennzeichnet, daß das Verfahren diskontinuierlich in einem einzigen geschlossenen Filter, beispielsweise einem Kesselfilter, durchgeführt wird.

15. Verfahren nach einem der Ansprüche 11 bis 14,
dadurch gekennzeichnet, daß die Filterhilfsmittel-Mischung homogenisiert und zur Verwendung in feuchtem Zustand gehalten wird.

16. Verwendung der Mischung nach einem der Ansprüche 1 bis 10
zum Nachklären, insbesondere zur Sterilisationsfiltration und/oder Tiefenfiltration von Getränken, chemischen, pharmazeutischen oder anderen Flüssigkeiten.

## Claims

1. Mixture of filtering aids having different morphological and physical properties for the settling of a filter cake for the purpose of mechanical separation of insoluble particles from liquids by filtration, in particular in the course of the preliminary and/or refiltration, of beverages, chemical, pharmaceutical or similar liquids, the filtering aid mixture being able to be re-used after cleaning, characterized in that the constituents of the mixture are resistant to solvents at the concentrations necessary for cleaning and as constituents at least the following components (a) and (b) are present: (a) chemically resistant metal and/or metal oxides and/or carbon particles of fibrous and/or granular structure, which are specifically heavy in comparison with component (b); (b) synthetic and/or cellulose fibres with a fibre length of 1 to 5000 µm and a fibre thickness of 0.5 to 100 µm.

2. Mixture according to Claim 1, characterized in that the specifically heavy mixing components consist of the following individual constituents or of mixtures of these constituents, namely highly calcined oxides, preferably α-aluminium oxide, zirconium oxide with a grain size fraction in the range between 1 to 200 µm,
sintered metal particles, in particular high-grade steel sintered metal particles, with a grain size fraction between 1 and 500 µm and a pore size between 0 to 30 µm,
fibres, preferably high-grade steel fibres, glass fibres or carbon fibres, with a fibre thickness between 1 and 100 µm and a fibre length of 0.05 to 5 mm.

3. Mixture according to Claim 1 or 2, characterized in that the second component (b) consists of dry crushed or shortened synthetic and/or cellulose fibres.

4. Mixture according to Claim 3, characterized in that the dry crushed or shortened synthetic and/or cellulose fibres have a fibre thickness of 2 to 100 µm.

5. Mixture according to Claim 1 or 2, characterized in that in order to increase the filtration power of the filter cake, the second component (b) consists of synthetic and/or cellulose fibres, which are fibrillated or spliced open.

6. Mixture according to Claim 5, characterized in that the fibrillated or spliced-open synthetic and/or cellulose fibres have a fibre length of 500 to 5000 µm and a fibre thickness of 0.5 to 20 µm.

7. Mixture according to Claim 1 or 2, characterized in that the second component (b) consists of the constituents according to Claim 3 or 4 and according to Claim 5 or 6.

8. Mixture according to one of Claims 1 to 7, characterized in that the synthetic fibres consist of polyethylene (PE), preferably high-density-polyethylene (HDPE), polypropylene (PP), halogenated polyethylenes, polyoxymethylene, polyamides, or of mixtures of such fibres.

9. Mixture according to Claim 8, characterized in that the synthetic fibres have a fibre length of 500 to 5000 µm and a fibre thickness of 2 to 100 µm.

10. Mixture according to one of Claims 1 to 9, characterized in that a-cellulose is provided as the cellulose fibres.

11. Method for the filtration of beverages, chemical, pharmaceutical or similar liquids by the mechanical separation of insoluble particles, in particular having colloidal structures, from the liquid, in which a filtering aid mixture according to one of Claims 1 to 10 is added to the unfiltrate, namely the untreated liquid comprising turbidities, for the purpose of forming a filter cake by settling, then the solid particles retained in the filter cake after settling are rinsed out and the filtering aid mixture as well as stabilizers possibly added are regenerated for the purpose of re-use.

12. Method according to Claim 11, characterized in that before their use, all the components of the filtration aid mixture are stirred together in the wet phase until their homogenization.

13. Method for the preliminary and subsequent clarification of liquids using a filtration aid mixture according to one of Claims 1 to 10, first of all preliminary filtration and then refiltration being carried out with one and the same filtration aid mixture, in that at the time of preliminary filtration, the filtration aid mixture is added continuously to the unfiltrate stream and a filter cake with a thickness of approximately 10 to 50 mm is settled, in the continuous filter cake formation occurring due to the settling filtration, the incorporation of a turbidity quantity being continued until the turbidity chamber in the filter apparatus is exhausted or until the maximum admissible pressure difference is reached, then the constituents of the filtration liquid retained in the filter cake being rinsed out by solvents, in which the retained constituents are soluble, in particular by a 0.1 - 10% by weight aqueous sodium hydroxide and/or soda solution at a temperature of 40 to 100°C, and then the liquid pre-filtered in this way is filtered again by way of the filter cake formed at the time of preliminary filtration, which is rinsed clean and sterilized, for the purpose of deep filtration, and after the completion of this filtration, the constituents retained in the filter cake again being rinsed out of the filter cake with corresponding solvents, whereupon the filter cake is removed from the filter, transferred to a separate container, homogeneously suspended and then used for renewed settling preliminary filtration, turbidities possibly retained in the filter cake also in the re-suspended state, if necessary being dissolved out of the filtration aid suspension by suitable solvents, in particular 1% NaOH at a temperature of 70 to 80°C.

14. Method according to Claim 13, characterized in that the method is carried out discontinuously in a single closed filter, for example a boiler filter.

15. Method according to one of Claims 11 to 14, characterized in that the filtration aid mixture is homogenized and is kept in the moist state for use.

16. Use of the mixture according to one of Claims 1 to 10, for subsequent clarification, in particular for the sterilization filtration and/or deep filtration of beverages, chemical, pharmaceutical or other liquids.

## Revendications

1. Mélange d'adjuvants de filtration de différentes propriétés morphologiques et physiques pour le dépôt d'un gâteau de filtre, en vue d'une séparation mécanique de particules insolubles de liquides par filtration, par voie de filtration préliminaire et/ou post-filtration, en particulier, de boissons, liquides chimiques, pharmaceutiques, ou similaires, le mélange d'adjuvants de filtration étant réutilisable après l'épuration, caractérisé en ce que les constituants du mélange sont résistants aux solvants dans les concentrations requises pour lépuration, et en ce que les composants suivants (a) et (b), au moins, sont disponibles comme constituants:
(a) particules et/ou oxydes métalliques résistants chimiquement, spécifiquement lourds par rapport au composant (b), et/ou particules de carbone de structure fibreuse et/ou granuleuse,
(b) fibres de cellulose et/ou de matière plastique d'une longueur de 1 à 5000 µm et d'une épaisseur de 0,5 à 100 µm.

2. Mélange suivant la revendication 1, caractérisé en ce que le composant du mélange spécifiquement lourd se compose des constituants individuels suivants, ou de mélanges de ces constituants, à savoir d'oxydes fortement calcinés, de préférence, d'oxyde d'aluminium alpha, d'oxyde de zirconium d'une fraction granulométrique comprise entre 1 et 200 µm,
de particules de métal fritté, de particules d'acier spécial fritté en particulier, d'une fraction granulométrique comprise entre 1 et 500 µm, et d'une grosseur de pores de 0 à 30 µm,
de fibres, de préférence, de fibres d'acier spécial, fibres de verre ou de carbone, d'un épaisseur de 1 à 100 µm et d'une longueur de 0,05 à 5 mm.

3. Mélange suivant l'une des revendications 1 ou 2, caracté-risé en ce que le second composant (b) se compose de fibres de cellulose et/ou de matière plastique courtes et/ou broyées à sec.

4. Mélange suivant la revendication 3, caractérisé en ce que les fibres de cellulose et/ou de matière plastique, courtes et/ou broyées à sec, ont une épaisseur de 2 à 100 µm.

5. Mélange suivant l'une des revendications 1 ou 2, caractérisé en ce que le second composant (b) se compose de fibres de cellulose et/ou de matière plastique, fibrillées et/ou clivées, en vue d'élever l'intensité de filtration du gâteau de filtre.

6. Mélange suivant la revendication 5, caractérisé en ce que les fibres de cellulose et/ou de matière plastique, fibrillées et/ou clivées, ont une longueur de 500 à 5000 µm et une épaisseur de 0,5 à 20 µm.

7. Mélange suivant l'une des revendications 1 ou 2, caractérisé en ce que le second composant (b) se compose des constituants suivant l'une des revendications 3 ou 4 et suivant l'une des revendications 5 ou 6.

8. Mélange suivant l'une quelconque des revendications 1 à 7, caractérisé en ce que les fibres de matière plastique se composent de polyéthylène (PE), de préférence, de polyéthylène haute densité (HDPE), de polypropylène (PP), de polyéthylènes halogénés, de polyoxyméthylène, de polyamides, ou de mélanges de telles fibres.

9. Mélange suivant la revendication 8, caractérisé en ce que les fibres de matière plastique ont une longueur de 500 à 5000 µm et une épaisseur de 2 à 100 µm.

10. Mélange suivant l'une quelconque des revendications 1 à 9, caractérisé en ce que de la cellulose alpha et prévue comme fibres cellulosiques.

11. Procédé de filtration de boissons, liquides chimiques, pharmaceutiques, ou similaires, par séparation mécanique de particules insolubles du liquide, dotées de structures colloïdales en particulier, selon lequel un mélange d'adjuvants de filtration, suivant l'une quelconque des revendications 1 à 10, est ajouté par doses au non-filtrat, à savoir le liquide non traité comportant des troubles, en vue de former un gâteau de filtre par dépôt, les particules solides, retenues dans le gâteau de filtre après le dépôt, étant ensuite éliminées par lavage, et le mélange d'adjuvants de filtration, ainsi que les stabilisants éventuellement ajoutés, étant régénérés en vue d'une réutilisation.

12. Procédé suivant la revendication 11, caractérisé en ce que tous les composants du mélange d'adjuvants de filtration sont conjointement agités en phase liquide, avant leur utilisation, jusqu'à leur homogénéisation.

13. Procédé de clarification préliminaire et finale de liquides, en utilisant un mélange d'adjuvants de filtration suivant l'une quelconque des revendications 1 à 10, une filtration préliminaire, suivie d'une post-filtration, étant d'abord assurée avec un seul et même mélange d'adjuvants de filtration, le mélange d'adjuvants étant ajouté par doses en continu, lors de la filtration préliminaire, au courant de non-filtrat, et un gâteau de filtre d'une épaisseur de 10 à 50 mm environ étant déposé, l'incorporation d'une quantité de troubles étant poursuivie dans la structure du gâteau de filtre, formée en continu par la filtration sur support à précouche, jusqu'à l'épuisement de l'espace de turbidité dans l'appareil de filtrage ou l'obtention de la pression différentielle maximale admissible, les constituants du liquide à filtrer, retenus dans le gâteau de filtre, étant ensuite chassés par des solvants, dans lesquels les constituants retenus sont solubles, par une solution aqueuse d'hydroxyde de sodium et/ou de soude de 0,1 à 10 % en poids en particulier, sous une température de 40 à 100° C, le liquide ainsi préfiltré étant de nouveau filtré, pour sa postfiltration, par l'intermédiaire du gâteau de filtre formé lors de la filtration préliminaire, lavé et stérilisé, en vue d'une filtration en profondeur, les constituants, retenus dans le gâteau de filtre à la fin de cette filtration, étant de nouveau chassés du gâteau par des solvants adéquats, le gâteau étant ensuite évacué du filtre, transféré dans un réservoir séparé, tenu en suspension homogène, puis utilisé pour une nouvelle filtration sur support à précouche, les troubles, éventuellement retenus dans le gâteau de filtre, étant également éliminés à l'état de resuspension, de la suspension des adjuvants de filtration le cas échéant, par des solvants adéquats, de l'hydroxyde de sodium à 1 % sous une température de 70 à 80° C en particulier.

14. Procédé suivant la revendication 13, caractérisé en ce que le procédé est conduit en discontinu dans un filtre unique fermé, un filtre stérilisateur par exemple.

15. Procédé suivant l'une quelconque des revendications 11 à 14, caractérisé en ce que le mélange d'adjuvants de filtration est homogénéisé, et est maintenu à l'état humide pour son utilisation.

16. Utilisation du mélange suivant l'une quelconque des revendications 1 à 10, pour la clarification finale, pour la filtration stérilisatrice et/ou la filtration en profondeur de boissons, liquides chimiques, pharmaceutiques, ou similaires, en particulier.
